# EUROPÄISCHE PATENTSCHRIFT

(11) **EP 3 631 890 B1**
(45) Veröffentlichungstag und Bekanntmachung des Hinweises auf die Patenterteilung: **06.03.2024**
(21) Anmeldenummer: 18730989.3
(22) Anmeldetag: 29.05.2018
(51) Int. Cl.: H01G 4/38, H01G 9/26, H01G 9/28, H01G 11/10, H01M 10/052, H01M 10/0585, H01G 4/40, H01M 4/58, H01M 10/0562, H01M 16/00, H01M 10/44, H01G 11/08, H01M 10/0565

(54) **HYBRIDE ENERGIEVERSORGUNGSSCHALTUNG, VERWENDUNG EINER HYBRIDEN ENERGIEVERSORGUNGSSCHALTUNG UND VERFAHREN ZUR HERSTELLUNG EINER HYBRIDEN ENERGIEVERSORGUNGSSCHALTUNG**
HYBRID POWER SUPPLY CIRCUIT, USE OF A HYBRID POWER SUPPLY CIRCUIT AND METHOD FOR PRODUCING A HYBRID POWER SUPPLY CIRCUIT
CIRCUIT D'ALIMENTATION HYBRIDE, UTILISATION D'UN CIRCUIT D'ALIMENTATION HYBRIDE ET PROCÉDÉ DE FABRICATION D'UN CIRCUIT D'ALIMENTATION HYBRIDE

(30) Priorität: 31.05.2017 DE 102017111942
(43) Veröffentlichungstag der Anmeldung: 08.04.2020
(73) Patentinhaber: TDK Electronics AG, 81671 München (DE)
(72) Erfinder: KÖSTNER, Stefan, 7082 Donnerskirchen (AT); OISHI, Masahiro, 212-0054 Kawasaki-shi Kanagawa (JP)
(74) Vertreter: Epping - Hermann - Fischer
(86) Internationale Anmeldenummer: PCT/EP2018/064073
(87) Internationale Veröffentlichungsnummer: WO 2018/219950

(56) Entgegenhaltungen:
- EP-B1- 1 273 058
- DE-A1-102013 112 578
- DE-U1-202012 010 789
- JP-A- 2003 132 941
- US-A1- 2011 064 977
- US-A1- 2013 266 827
- US-A1- 2014 181 540

## Beschreibung

Die Erfindung betrifft eine hybride Energieversorgung für elektrische Schaltungen, die spezifische Anforderungen an eine Energiequelle haben.

Moderne elektrische Bauelemente sollen möglichst kleine Abmessungen haben und immer mehr elektrische Funktionen zur Verfügung stellen. Dazu benötigen sie Energiequellen, die eine möglichst spannungsstabile Versorgungsspannung zur Verfügung stellen, eine hohe Anzahl an Zyklen ohne Degradation durchhalten und kurze Reaktionszeiten auf Lade- bzw. Entladepulse aufweisen.

Es gibt die Möglichkeit, elektrische Geräte durch Batterien oder Akkumulatoren mit elektrischer Energie zu versorgen. Batterien oder Akkumulatoren eignen sich gut für Anwendungen mit kontinuierlichem Laststrombetrieb. Problematisch sind Batterien bei Anwendungen mit gepulster Zusatzlast und/oder unregelmäßigem Ladezyklus.

Beim sogenannten Internet of Things (IOT) sollen eine Vielzahl unterschiedlicher elektrischer Geräte vorzugsweise über Funkverbindungen miteinander kommunizieren. Eine kontinuierliche Kommunikation ist dabei nicht notwendig. Speziell in Geräten, in denen Sensoren kontinuierlich laufen und eine Kommunikation mit einer externen Umgebung in regelmäßigen oder unregelmäßigen Abständen stattfinden soll, ist die Verwendung von Batterien problematisch. Werden die Batterien so ausgelegt, dass die kontinuierliche Last gut abgedeckt werden kann, wird eine Energieversorgung bei zusätzlicher Last problematisch. Wird eine Batterie so ausgelegt, dass sie auch zusätzliche Lasten stets bedienen kann, ist sie für die meiste Zeit überdimensioniert.

Es besteht deshalb der Wunsch nach einer Energieversorgungsschaltung, die die oben genannten Spezifikationen erfüllt.

Die Druckschrift EP 1273058 B1 offenbart eine Energieversorgungsschaltung mit Batterieschichten, die nacheinander auf einem Substrat abgeschieden werden. Auf den Batterieschichten kann ein Kondensator angeordnet werden.

Die DE 102013112578 A1 offenbart eine Energieversorgungsschaltung, bei dem ein Akkumulator mit einem Kondensator verschaltet ist. Aus der US 2011/064977 A1 ist ein Akkumulator bekannt, bei dem Zenerdioden zur Spannungsstabilisierung eingesetzt werden. Aus der US 2013/266827 A1 und DE 202012010789 U1 sind Antriebssysteme mit Festkörperakkumulatoren bekannt.

Die Druckschrift JP 2003 132941 A offenbart eine Festelektrolyt-Batterie mit integriertem Kondensator, bei dem eine Festelektrolyt-Schicht auf einen Kondensator durch Sputtern aufgebracht wird.

Die Druckschrift US 2014/181540 A1 offenbart ein hybrides Batteriepaket umfassend eine Li-Polymer-Batterie, die mit einem Superkondensator parallel verschaltet ist.

Co-fire-Verfahren (in wortwörtlicher deutscher Übersetzung "Ko-Feuer"-Verfahren) sind aus dem Fachwissen bekannt, wie beispielsweise durch die Wikipedia-Artikel zu Co-fired ceramic (2017, 2. März,
https://en.wikipedia.org/w/index.php?title=Co-fired ceramic&oldid=76821978) und zu Low-Temperature Cofired Ceramics (2016, 7. Oktober,
https://de.wikipedia.org/w/index.php?title=Low Temperature Co fired Ceramics&oldid=158557554) hervorgeht.

Es ist eine zu lösende Aufgabe, eine hybride Energieversorgungsschaltung mit verbesserten Eigenschaften anzugeben.

Der Schutzumfang wird durch die unabhängigen Ansprüche bestimmt. Die abhängigen Ansprüche geben vorteilhafte Ausgestaltungen der Erfindung an.

Die hybride Energieversorgungsschaltung umfasst einen ersten Energiespeicher und einen zweiten Energiespeicher. Der erste und der zweite Energiespeicher sind in einem Modul zusammengefasst und elektrisch verschaltet. Der erste Energiespeicher ist ein Festkörperakkumulator.

Die Kombination zweier verschiedener Energiespeicher, von denen ein Energiespeicher ein Festkörperakkumulator ist, erlaubt es, elektrische Geräte mit einer kontinuierlichen Dauerlast zu betreiben und gleichzeitig eine Energieversorgung mit einer ausreichenden Leistung für kurze Leistungsspitzen, z.B. gepulste Zusatzlasten, zur Verfügung zu stellen.

Die Verwendung eines Festkörperakkumulators als ersten Energiespeicher, der im Wesentlichen für eine kontinuierliche Dauerlast zuständig sein kann, bringt eine Menge an Vorteile mit sich: Festkörperakkumulatoren können in beinahe beliebiger Form hergestellt werden. Festkörperakkumulatoren weisen eine hohe Energiedichte auf und können deshalb mit kleinen Abmessungen bereitgestellt werden. Solche Akkumulatoren sind relativ unempfindlich gegenüber Beschädigungen und dem Verlust eines Elektrolyten, da kein flüssiger Elektrolyt vorhanden ist. Festkörperakkumulatoren können dabei zusätzlich aus Materialien bestehen, die mit Herstellungsprozessen für übrige Schaltungskomponenten kompatibel sind.

Speziell im Vergleich mit konventionellen Hybridsystemen aus Batterien oder konventionellen Akkumulatoren einerseits und Kondensatoren andererseits stellt die hier beschriebene hybride Energieversorgungsschaltung eine Verbesserung dar.

Der zweite Energiespeicher ist ein Kondensator. Der zweite Energiespeicher kann ausgewählt sein aus einem Keramikkondensator und einem Mehrlagenkeramikkondensator.

Solche Kondensatoren weisen ebenfalls eine hohe Energiedichte auf und erlauben das Fortführen des anhaltenden Trends zur Miniaturisierung elektrischer Geräte.

Festkörperakkumulatoren stellen eine spannungsstabile Energiequelle dar. Kondensatoren zeichnen sich durch eine hohe Zyklenfestigkeit und schnelle Reaktion auf Lade- und Entladepulse aus.

Die beschriebene hybride Energieversorgungsschaltung ist dabei wartungsneutral, das heißt sie weist nicht mehr Wartung als konventionelle hybride Energieversorgungsschaltungen auf. Vielmehr ermöglicht sie eine kleinere Bauform und aufgrund des Verzichts auf einen flüssigen Elektrolyten sind die Lebensdauer und die Zuverlässigkeit verbessert.

Es ist möglich, dass die Energieversorgungsschaltung zusätzlich einen ASIC-Chip (ASIC = application-specific integrated circuit = anwendungsspezifische integrierte Schaltung) zum Steuern oder zum Regeln eines Lade- oder Entladeprozesses aufweist.

Solche ASICs können für eine bestimmte Anwendung auf bestimmte Parameter, z.B. Energieeffizienz optimiert sein. Eine solche Schaltung ermöglicht es, den Akkumulator vor einer Tiefenentladung oder vor einer Überbeanspruchung beim Laden zu schützen.

Die Schaltung im ASIC-Chip ist dabei mit dem ersten Energiespeicher und dem zweiten Energiespeicher elektrisch gekoppelt.

Der erste Energiespeicher und der zweite Energiespeicher sind ebenfalls elektrisch miteinander gekoppelt. Es ist denkbar, dass die beiden Energiespeicher in Serie oder - vorzugsweise - parallel verschaltet sind.

Beide Energiespeicher können dabei mit einem ersten Anschluss und einem zweiten Anschluss verschaltet sein, über die die hybride Energieversorgungsschaltung geladen werden kann und über die die Energieversorgungsschaltung elektrische Energie an eine Schaltungsumgebung abgeben kann.

Nicht erfindungsgemäß ist es, dass der erste und der zweite Energiespeicher als ein erstes und zweites SMD-Bauelement (SMD = surface mounted device = oberflächenmontiertes Schaltungselement) ausgeführt sind. Bei einer derartigen Ausbildung können das erste und das zweite SMD-Bauelement übereinander oder nebeneinander angeordnet und miteinander verschaltet sein.

Erfindungsgemäß sind der erste Energiespeicher und der zweite Energiespeicher zusammen als ein Mehrlagensystem in einem Vielschichtprozess monolithisch hergestellt.

Ein Mehrlagensystem hat dabei eine Vielzahl übereinander angeordneter Lagen aus unterschiedlichen Materialien. Dabei können sich dielektrische Schichten und elektrisch leitende Schichten abwechseln.

Ein kapazitives Element beispielsweise kann eine Vielzahl an Elektrodenlagen in Metallisierungsebenen mit dazwischen angeordneten dielektrischen Schichten aufweisen. Übereinander angeordnete, benachbarte Elektrodenlagen sind dabei abwechselnd mit jeweils einer von zwei Anschlusselektroden verschaltet.

Analog dazu kann ein Festkörperakkumulator ebenfalls übereinander angeordnete Schichtenlagen aus strukturierten Elektrodenlagen und dazwischen angeordneten Elektrolytlagen aufweisen.

Mehrlagensysteme, z.B. HTCC-Schichtenstapel (HTCC = High temperature cofire ceramics) oder LTCC-Mehrlagensysteme (LTCC = Low temperature cofire ceramics) werden durch entsprechende bekannte und gut beherrschbare Vielschichtprozesse hergestellt.

Es ist möglich, einen Satz aus Materialien zu finden, mit dem einerseits ein Mehrlagenkondensator und andererseits ein Festkörperakkumulator hergestellt werden kann. Dabei sind die Materialien vorzugsweise so ausgesucht, dass sie zu Verfahren zur Herstellung von solchen Mehrlagenkomponenten kompatibel sind.

Es wurde also herausgefunden, dass Mehrlagenkeramiksubstrate hergestellt werden können die sowohl Kondensatoren als auch Festkörperakkumulatoren beinhalten. Dadurch können extreme Energie- und Leistungsdichten erhalten werden.

Aber auch die übereinander Anordnung von SMD-Bauelementen in Form von Kondensatoren und Festkörperakkumulatoren erlauben eine extrem hohe Energie- und Leistungsdichte.

Es ist bevorzugt, wenn der Festkörperakkumulator reflow-geeignet ist. Das heißt, der Festkörperakkumulator ist thermisch so stabil, dass er die Temperaturen beim Durchlaufen eines reflow-Löt-Prozesses aushält, ohne Schaden zu nehmen.

Die Energieversorgungsschaltung umfasst ferner einen Varistor und/oder eine Diode, z.B. eine Zener-Diode, zum Begrenzen einer Spannung auf einen Minimalwert (z.B. beim Entladen) oder einen Maximalwert (z.B. beim Laden) umfasst.

Ein Varistor ist dabei ein Schaltungselement mit einem elektrischen Widerstand, der von der angelegten Spannung abhängt. Der elektrische Widerstand sinkt dabei mit zunehmender angelegter Spannung.

Der Varistor ist dabei vorzugsweise parallel zum ersten Energiespeicher und/oder parallel zum zweiten Energiespeicher geschaltet.

Wird eine Zener-Diode verwendet, so hilft diese ebenfalls zur Spannungsbegrenzung und/oder als Schutz gegen eine Überlastung.

Es ist entsprechend möglich, dass der erste Energiespeicher und der zweite Energiespeicher direkt miteinander verschaltet, sind.

Der erste und der zweite Energiespeicher können übereinander angeordnet oder nebeneinander angeordnet sein.

Der Festkörperakkumulator besteht aus Materialien, die mit einem Ko-Feuer-Prozess, z.B. zur Herstellung einer HTCC- oder LTCC-Mehrlagenkomponente, kompatibel sind.

Der Festkörperelektrolyt des Festkörperakkumulators kann dabei aus folgenden Verbindungen ausgewählt sein:

Li₁₊ₓAlₓTi₂₋ₓ(PO₄)₃ (0≦x≦0.6)

La_{0.5}Li_{0.5}TiO₃,

Li₁₄Zn(GeO₄)₄,

Li₇La₃Zr₂O₁₂,

Li_{1.3}Al_{0.3}Ti_{1.7}(PO₄)₃ ,

Li_{1.5}Al_{0.5}Ge_{1.5}(PO₄)₃,

Li_{3.25}Ge_{0.25}P_{0.75}S₄ ,

Li₃PS₄,

Li₂S-P₂S₅ ,

Li₂O-V₂O₅-SiO₂,

Li₃PO₄,

Li_{3.5}Si_{0.5}P_{0.5}O₄,

Li_{2.9}PO_{3.3}N_{0.46} ,

Das Material der Elektroden des Festkörperakkumulators kann dabei aus folgenden Materialien ausgewählt sein: LiVOPO₄ und Li₃V₂(PO4)₃

Die Energieversorgungsschaltung ist dazu geeignet, in einem elektrischen Bauelement, das zusätzlich einen HF-Sender, einen HF-Empfänger und/oder einen HF-Transceiver aufweist, verwendet zu werden.

Entsprechende Antennen und Frontend-Schaltungen können ebenfalls vorhanden sein.

Ein Verfahren zur Herstellung einer hybriden Energieversorgungsschaltung umfasst das Kombinieren eines Kondensators mit einem Festkörperakkumulators in einem kompakten Modul.

In dem Verfahren wird ein Lagensystem für den Kondensator und ein Lagensystem für den Festkörperakkumulator in einem Vielschichtprozess zu einem monolithischen Modul zusammengeführt.

Mit anderen Worten: Der Kondensator und der Festkörperakkumulator werden zusammen unter Verwendung von Prozessierungsschritten für Vielschichtprozesse hergestellt, sodass ein kompaktes monolithisch integriertes Modul erhalten wird.

Elektrische Geräte mit einem derartigen hybriden Energieversorgungssystem bzw. das hybride Energieversorgungssystem eines solchen Geräts kann durch unterschiedliche Energiequellen geladen werden. Dazu gehören photovoltaische Ladungssysteme und piezoelektrische Generatoren. Solche und andere Ladungssysteme unterscheiden sich z.B. von einem Ladegerät, das von einem Stromnetz gespeist wird, durch eine sehr variable Ladeleistung. Das hybride Energieversorgungssystem ist dabei leicht in der Lage den zugehörigen unregelmäßigen Ladestrom ohne thermische oder anderweitige Probleme aufzunehmen.

Der Festkörperakkumulator kann aus solchen Materialien bestehen, die unempfindlich gegenüber einer tiefen Entladung, ggf. bis 0 V, sind. Ansonsten kann eine ASIC eine Tiefenentladung oder eine Überbeanspruchung beim Aufladen verhindern.

Das hybride Energieversorgungssystem kann zusätzliche Schaltungselemente, z.B. zusätzliche passive Schaltungselemente oder zusätzliche aktive Schaltungselemente umfassen. In einem ASIC-Chip kann eine Wächterfunktion implementiert sein, um das Laden der Batterie, insbesondere bei unregelmäßigen Ladungsimpulsen, zu optimieren.

Wichtige Funktionsprinzipien und Details bevorzugter Ausführungsformen sind in den schematischen Figuren näher erläutert.

Es zeigen:
- Figur 1:: ein Ersatzschaltbild einer hybriden Energieversorgungsschaltung.
- Figur 2:: eine mögliche Anordnung der Energiespeicher nebeneinander.
- Figur 3:: eine mögliche Anordnung der Energiespeicher übereinander.
- Figur 4:: die Verwendung eines Varistors.
- Figur 5:: die Verwendung einer ASIC.
- Figur 6:: einen Querschnitt durch ein entsprechendes Bauelement.
- Figur 7:: einen Querschnitt durch eine erfindungsgemäße Ausführungsform eines Bauelements.
- Figur 8:: eine perspektivische Ansicht einer Mehrlagenkomponente:
- Figur 9:: eine mögliche Verschaltung mit einer externen Schaltung.
- Figur 10:: eine mögliche Verschaltung mit einer Ladeschaltung.

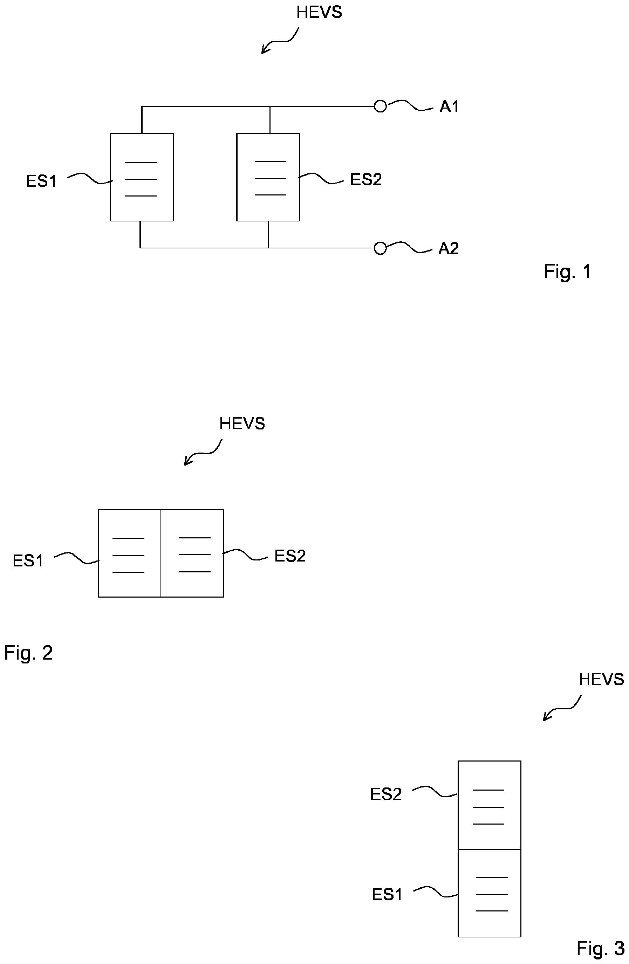

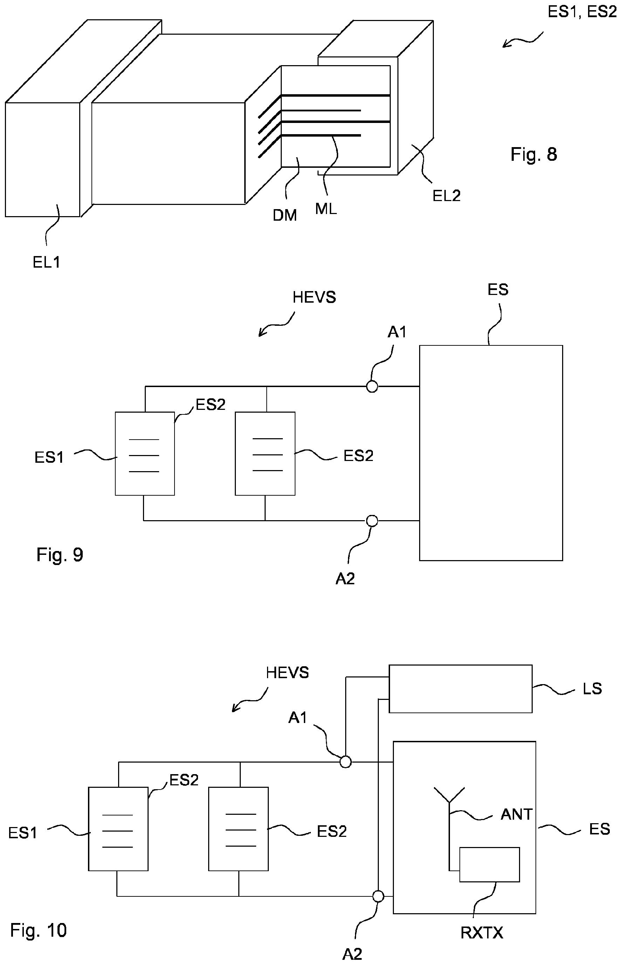

Die Figuren 1 bis 6 und 8 bis 10 zeigen Beispiele, um verschiedene Aspekte der Erfindung zu erläutern. Es handelt sich nur dann um Ausführungsformen der Erfindung, sofern die Energiespeicher als ein Mehrlagensystem in einem Ko-Feuer-Vielschichtprozess monolithisch hergestellt und monolithisch in einem keramischen Mehrlagensubstrat integriert sind und die weiteren Merkmale der unabhängigen Ansprüche erfüllt sind.

Figur 1 zeigt ein Ersatzschaltbild einer hybriden Energieversorgungsschaltung HEVS, die einen ersten Energiespeicher ES1 und einen zweiten Energiespeicher ES2 aufweist. Der erste Energiespeicher ES1 und der zweite Energiespeicher ES2 sind parallel zueinander verschaltet. Beide Energiespeicher sind einem ersten Anschluss A1 und einem zweiten A2 verschaltet. Über die beiden Anschlüsse A1, A2 kann die hybride Energieversorgungsschaltung elektrische Energie an eine externe Schaltungsumgebung abgeben oder elektrische Energie von einer externen Schaltungsumgebung entgegennehmen.

Der erste Energiespeicher ES1 ist dabei ein Festkörperakkumulator. Der zweite Energiespeicher ES2 ist vorzugsweise ein Kondensator.

Sowohl der erste Energiespeicher ES1 als auch der zweite Energiespeicher ES2 können vorzugsweise als Mehrlagenkomponente mit Elektrodenlagen als strukturierte Elemente in Metallisierungslagen und dazwischen angeordneten dielektrischen Lagen oder Elektrolytlagen im Falle des Akkumulators aufweisen.

Figur 2 zeigt eine mögliche Nebeneinander-Anordnung des ersten Energiespeichers ES1 relativ zum zweiten Energiespeicher ES2. Es ist bevorzugt, die Energiespeicher relativ zueinander so anzuordnen, dass ein insgesamt möglichst kleiner Aufbau erhalten wird. Sowohl der erste Energiespeicher als auch der zweite Energiespeicher sind vorzugsweise Mehrlagenkomponenten mit einem flächigen Aufbau, bei denen die Breite und die Tiefe jeweils deutlich höher als die Höhe sein können.

Figur 3 zeigt eine mögliche Anordnung der beiden Energiespeicher übereinander.

Insbesondere wenn die beiden Energiespeicher als flächige Komponenten ausgeführt sind, ist es vorteilhaft beide Komponenten übereinander anzuordnen.

Nicht erfindungsgemäß können sowohl der erste Energiespeicher ES1 als auch der zweite Energiespeicher ES2 als SMD-fähige Einzelkomponenten gefertigt werden. Anschließend können sie übereinander angeordnet und miteinander verlötet und dadurch elektrisch leitend verschaltet und mechanisch fest verbunden werden.

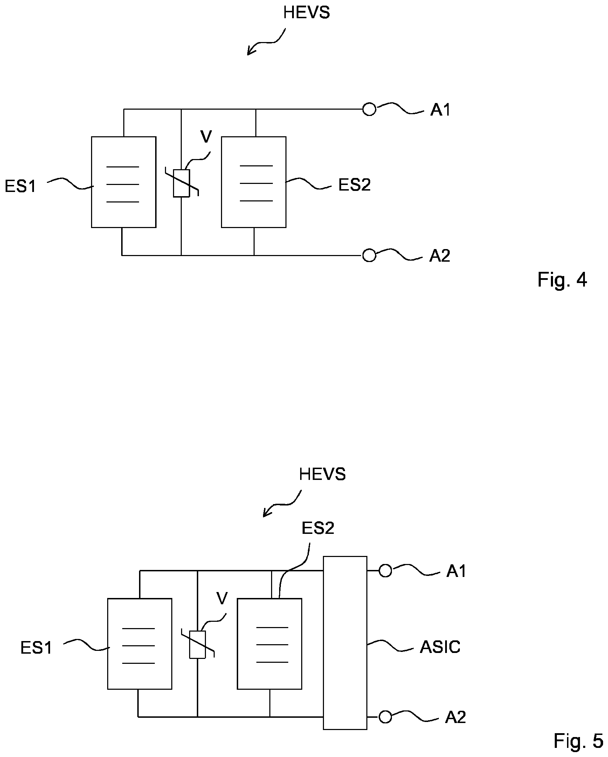

Figur 4 zeigt ein mögliches Ersatzschaltbild einer hybriden Energieversorgungsschaltung HEVS, bei der ein Varistor V parallel zum ersten Energiespeicher ES1 und parallel zum zweiten Energiespeicher ES2 verschaltet ist. Der Varistor stellt dabei einen Schutz gegen ein Überladen dar, wenn die Energieversorgungsschaltung über die Anschlüsse A1, A2 geladen wird.

Kurze Spannungsspitzen bzw. Ladungsspitzen kann dabei der zweite Energiespeicher ES2 leicht auffangen.

Figur 5 zeigt die Verwendung einer ASIC (application-specific integrated circuit = anwendungsspezifische integrierte Schaltung). Die ASIC ist dabei mit den Energiespeichern und den beiden Anschlüssen A1, A2 verbunden und kann dazu benutzt werden, den Prozess des Ladens, bzw. den Prozess des Entladens, zu steuern.

Die ASIC kann dabei in einem ASIC-Chip eingebettet sein und darauf ausgelegt sein, einen möglichst geringen Energieverbrauch zu haben, d.h. möglichst energieeffizient zu arbeiten.

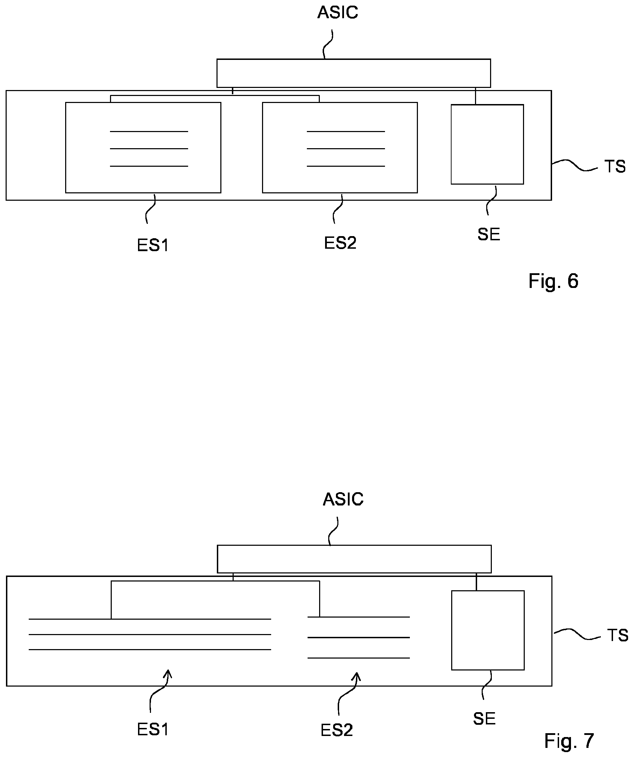

Figur 6 zeigt einen Querschnitt durch ein Bauelement, bei dem der erste Energiespeicher ES1 und der zweite Energiespeicher ES2 in einem Trägersubstrat TS eingebettet sind. Ein ASIC-Chip ist an der Oberseite des Trägersubstrats angeordnet. Weitere Schaltungselemente SE können im Trägersubstrat eingebettet sein. Über metallisierte Signalleitungen im Trägersubstrat oder an der Oberseite des Trägersubstrats und durch Durchkontaktierungen durch das Trägersubstrat können die verschiedenen Komponenten miteinander verschaltet sein.

Alternativ ist es auch möglich, dass weitere Schaltungselemente an der Oberseite des Trägersubstrats TS angeordnet und verschaltet sind.

Figur 7 zeigt in einem Querschnitt eine erfindungsgemäße Ausführungsform, bei der die Komponenten des ersten Energiespeichers ES1 und die Komponenten des zweiten Energiespeichers ES2 monolithisch in einem Trägersubstrat TS integriert sind.

Das Trägersubstrat ist dabei ein keramisches Mehrlagensubstrat, z.B. ein LTCC-Substrat oder ein HTCC-Substrat.

## Patentansprüche

1. Hybride Energieversorgungsschaltung (HEVS), umfassend
- einen ersten Energiespeicher (ES1) und
- einen zweiten Energiespeicher (ES2),
- einen Varistor (V) und/oder eine Zener-Diode zum Begrenzen einer Spannung auf einen Minimalwert oder einen Maximalwert, wobei
- der erste (ES1) und der zweite (ES2) Energiespeicher in einem Modul zusammengefasst und elektrisch verschaltet sind;
- der erste Energiespeicher (ES1) ein Festkörperakkumulator ist, wobei der zweite Energiespeicher (ES2) ausgewählt ist aus einem Keramikkondensator und einem Mehrlagenkeramikkondensator, wobei der Festkörperakkumulator aus Materialien besteht, die mit einem Ko-Feuer-Prozess kompatibel sind,
- der erste Energiespeicher (ES1) und der zweite Energiespeicher (ES2) zusammen als ein Mehrlagensystem in einem Ko-Feuer-Vielschichtprozess monolithisch hergestellt und monolithisch in einem keramischen Mehrlagensubstrat integriert sind;
- die Energieversorgungsschaltung dazu geeignet ist, in einem elektrischen Bauelement mit einem HF-Sender, einem HF-Empfänger und/oder einem HF-Transceiver verwendet zu werden.

2. Energieversorgungsschaltung nach dem vorherigen Anspruch, ferner umfassend einen ASIC-Chip (ASIC) zum Steuern oder Regeln eines Lade- oder Entladeprozesses.

3. Energieversorgungsschaltung nach einem der vorherigen Ansprüche, wobei der erste Energiespeicher (ES1) und der zweite Energiespeicher (ES2) nebeneinander angeordnet sind und im Mehrlagensubstrat durch metallisierte Signalleitungen miteinander verschaltet sind.

4. Energieversorgungsschaltung nach einem der vorherigen Ansprüche, wobei der Festkörperakkumulator Elektrodenlagen und dazwischen angeordnete Elektrolytlagen aufweist, wobei die Elektrolytlagen einen Festkörperelektrolyten aufweisen, der aus folgenden Verbindungen ausgewählt ist:
Li₁₊ₓAlₓTi₂₋ₓ (PO₄)₃ (0≦x≦0.6)
La_{0.5}Li_{0.5}TiO₃,
Li₁₄Zn(GeO₄)₄,
Li₇La₃Zr₂O₁₂,
Li_{1.3}Al_{0.3}Ti_{1.7}(PO₄)₃,
Li_{1.5}Al_{0.5}Ge_{1.5}(PO₄)₃,
Li_{3.25}Ge_{0.25}P_{0.75}S₄,
Li₃PS₄,
Li₂S-P₂S₅ ,
Li₂O-V₂O₅-SiO₂,
Li₃PO₄,
Li_{3.5}Si_{0.5}P_{0.5}O₄,
Li_{2.9}PO_{3.3}N_{0.46}, wobei das Material der Elektrodenlagen des Festkörperakkumulators dabei aus folgenden Materialien ausgewählt ist:
LiVOPO₄ und Li₃V₂(PO₄)₃.

5. Verfahren zur Herstellung einer hybriden Energieversorgungsschaltung (HEVS) nach einem der Ansprüche 1 bis 4, umfassend das Kombinieren eines Kondensators, der ein Keramikkondensator oder Mehrlagenkeramikkondensator ist, und eines Festkörperakkumulators in einem kompakten Modul, bei dem ein Lagensystem für den Kondensator und ein Lagensystem für den Festkörperakkumulator in einem Ko-Feuer-Vielschichtprozess zu einem monolithischen Modul zusammengeführt und monolithisch in ein keramisches Mehrlagensubstrat integriert werden.

## Claims

1. Hybrid power supply circuit (HEVS), comprising
- a first energy store (ES1) and
- a second energy store (ES2),
- a varistor (V) and/or a zener diode for limiting a voltage to a minimum value or a maximum value,
wherein
- the first (ES1) and second (ES2) energy stores are combined and electrically interconnected in a module;
- the first energy store (ES1) is a solid-state accumulator, wherein the second energy store (ES2) is selected from a ceramic capacitor and a multilayer ceramic capacitor, wherein the solid-state accumulator consists of materials that are compatible with a co-firing process,
- the first energy store (ES1) and the second energy store (ES2) are monolithically produced together as a multilayer system in a co-firing multilayer process and are monolithically integrated in a ceramic multilayer substrate;
- the power supply circuit is suitable for being used in an electrical component with an RF transmitter, an RF receiver and/or an RF transceiver.

2. Power supply circuit according to the preceding claim, furthermore comprising an ASIC chip (ASIC) for controlling or regulating a charging or discharging process.

3. Power supply circuit according to either of the preceding claims, wherein the first energy store (ES1) and the second energy store (ES2) are arranged next to one another and are interconnected with one another in the multilayer substrate by metallized signal lines.

4. Power supply circuit according to any of the preceding claims, wherein the solid-state accumulator has electrode layers and electrolyte layers arranged therebetween, wherein the electrolyte layers comprise a solid electrolyte selected from the following compounds:
Li₁₊ₓAlₓTi₂₋ₓ(PO₄)₃ (0 ≤ x ≤ 0.6)
La_{0.5}Li_{0.5}TiO₃,
Li₁₄Zn(GeO₄)₄,
Li₇La₃Zr₂O₁₂,
Li_{1.3}Al_{0.3}Ti_{1.7}(PO₄)₃,
Li_{1.5}Al_{0.5}Ge_{1.5}(PO₄)₃,
Li_{3.25}Ge_{0.25}P_{0.75}S₄,
Li₃PS₄,
Li₂S-P₂S₅,
Li₂O-V₂O₅-SiO₂,
Li₃PO₄,
Li_{3.5}Si_{0.5}P_{0.5}O₄,
Li_{2.9}PO_{3.3}N_{0.46}, wherein the material of the electrode layers of the solid-state accumulator in this case is selected from the following materials:
LiVOPO₄ and Li₃V₂(PO₄)₃.

5. Method for producing a hybrid power supply circuit (HEVS) according to any of claims 1 to 4, comprising combining a capacitor, which is a ceramic capacitor or multilayer ceramic capacitor, and a solid-state accumulator in a compact module, in which a layer system for the capacitor and a layer system for the solid-state accumulator are merged in a co-firing multilayer process to form a monolithic module and are monolithically integrated in a ceramic multilayer substrate.

## Revendications

1. Circuit d'alimentation en énergie hybride (HEVS), comprenant
- un premier accumulateur d'énergie (ES1) et
- un deuxième accumulateur d'énergie (ES2),
- une varistance (V) et/ou une diode Zener pour limiter une tension à une valeur minimale ou à une valeur maximale, dans lequel
- les premier (ES1) et deuxième (ES2) accumulateurs d'énergie sont réunis dans un module et sont connectés électriquement ;
- le premier accumulateur d'énergie (ES1) est un accumulateur à l'état solide, le deuxième accumulateur d'énergie (ES2) étant choisi parmi un condensateur céramique et un condensateur céramique multicouche, l'accumulateur à l'état solide étant constitué de matériaux compatibles avec un processus de co-frittage,
- le premier accumulateur d'énergie (ES1) et le deuxième accumulateur d'énergie (ES2) sont fabriqués ensemble de manière monolithique sous la forme d'un système multicouche par un processus multicouche de co-frittage et sont intégrés de manière monolithique dans un substrat multicouche céramique ;
- le circuit d'alimentation en énergie est adapté pour être utilisé dans un composant électrique comportant un émetteur HF, un récepteur HF et/ou un émetteur-récepteur HF.

2. Circuit d'alimentation en énergie selon la revendication précédente, comprenant en outre une puce ASIC (ASIC) destinée à commander ou réguler un processus de charge ou de décharge.

3. Circuit d'alimentation en énergie selon l'une des revendications précédentes, dans lequel le premier accumulateur d'énergie (ES1) et le deuxième accumulateur d'énergie (ES2) sont disposés l'un à côté de l'autre et sont connectés l'un à l'autre dans le substrat multicouche par des lignes de signaux métallisées.

4. Circuit d'alimentation en énergie selon l'une des revendications précédentes, dans lequel l'accumulateur à l'état solide comporte des couches d'électrodes et des couches d'électrolyte disposées entre celles-ci, les couches d'électrolyte comportant un électrolyte solide choisi parmi les composés suivants :
Li₁₊ₓAlₓTi₂₋ₓ(PO₄)₃ (0≤x≤0,6)
La_{0,5}Li_{0,5}TiO₃,
Li₁₄Zn(GeO₄)₄,
Li₇La₃Zr₂O₁₂,
Li_{1,3}Al_{0,3}Ti_{1,7}(PO₄)₃,
Li_{1,5}Al_{0,5}Ge_{1,5}(PO₄)₃,
Li_{3,25}Ge_{0,25}P_{0,75}S₄,
Li₃PS₄,
Li₂S-P₂S₅,
Li₂O-V₂O₅-SiO₂,
Li₃PO₄,
Li_{3,5}Si_{0,5}P_{0,5}O₄,
Li_{2,9}PO_{3,3}N_{0,46}, dans lequel le matériau des couches d'électrodes de l'accumulateur à l'état solide est choisi parmi les matériaux suivants :
LiVOPO₄ et Li₃V₂(PO₄)₃.

5. Procédé de fabrication d'un circuit d'alimentation en énergie hybride (HEVS) selon l'une des revendications 1 à 4, comprenant la combinaison d'un condensateur, qui est un condensateur céramique ou un condensateur céramique multicouche, et d'un accumulateur à l'état solide dans un module compact, dans lequel un système de couches destiné au condensateur et un système de couches destiné à l'accumulateur à l'état solide sont combinés en un module monolithique lors d'un processus multicouche de co-frittage et intégrés de manière monolithique dans un substrat multicouche céramique.
